# DEMANDE DE BREVET EUROPEEN

(11) **EP 3 489 834 A1**
(43) Date de publication de la demande: **29.05.2019**
(21) Numéro de dépôt: 18207693.5
(22) Date de dépôt: 22.11.2018
(51) Int. Cl.: G06F 12/08, G06F 12/109

(54) **SYSTÈME INFORMATIQUE, PROCÉDÉ D'ACCÈS À UN FICHIER INFORMATIQUE ET PROGRAMME D'ORDINATEUR CORRESPONDANT**

(30) Priorité: 23.11.2017 FR 1761098
(71) Demandeur: BULL SAS, 78340 Les Clayes Sous Bois (FR)
(72) Inventeur: MENYHART, Zoltan, 38100 Grenoble (FR)
(74) Mandataire: Bonnet, Michel

(57) **Abrégé**

Ce système informatique (100) comporte : une unité de traitement centrale (UTC) ; une mémoire principale (MP) comportant des emplacements mémoire ; et une unité de gestion de mémoire (UGM) conçue pour respectivement associer des emplacements mémoire de la mémoire principale (MP) à des emplacements mémoire d'une mémoire virtuelle d'un processus.

La mémoire principale (MP) est non volatile et le système informatique (100) comporte en outre : des moyens matériels et/ou logiciels (SE, SF) pour créer un fichier informatique dans un ou plusieurs emplacements mémoire de la mémoire principale (MP) ; et des moyens matériels et/ou logiciels (SE, SF) pour commander à l'unité de gestion de mémoire (UGM) de respectivement associer au moins un des emplacements mémoire de la mémoire principale (MP) où le fichier informatique est enregistré à au moins un emplacement mémoire d'une mémoire virtuelle d'un processus, afin de permettre à l'unité de traitement centrale (UTC) exécutant ce processus d'accéder au contenu du fichier informatique.

## Description

La présente invention concerne un système informatique, un procédé d'accès à un fichier informatique et un programme d'ordinateur correspondant.

L'invention s'applique plus particulièrement à un système informatique comportant :
- une unité de traitement centrale,
- une mémoire principale comportant des emplacements mémoire, et
- une unité de gestion de mémoire conçue pour respectivement associer des emplacements mémoire de la mémoire principale à des emplacements mémoire d'une mémoire virtuelle d'un processus.

Dans l'état de la technique, pour des raisons de coût, la mémoire principale est volatile (et très rapide) et les données persistantes sont enregistrées dans une mémoire secondaire non volatile (et plus lente que la mémoire principale) du système informatique, telle qu'un disque dur. Les données dans la mémoire secondaire sont organisées selon un système de fichiers. Le système informatique comporte en outre une interface d'entrée/sortie intercalée entre l'unité de traitement centrale et la mémoire secondaire. Ainsi, pour lire les données, ces dernières doivent être recopiées dans la mémoire principale au travers de l'interface d'entrée/sortie. De même, pour écrire les données, ces dernières doivent transiter par l'interface d'entrée/sortie jusqu'à la mémoire secondaire. Or, le passage des données au travers de l'interface d'entrée/sortie est lent.

Il peut ainsi être souhaité de prévoir un système informatique qui permette de s'affranchir d'au moins une partie des problèmes et contraintes précités.

L'invention a donc pour objet un système informatique comportant :
- une unité de traitement centrale,
- une mémoire principale comportant des emplacements mémoire,
- une unité de gestion de mémoire conçue pour respectivement associer des emplacements mémoire de la mémoire principale à des emplacements mémoire d'une mémoire virtuelle d'un processus,
caractérisé en ce que la mémoire principale est non volatile et en ce que le système informatique comporte en outre :
- des moyens matériels et/ou logiciels pour créer un fichier informatique dans un ou plusieurs emplacements mémoire de la mémoire principale,
- des moyens matériels et/ou logiciels pour commander à l'unité de gestion de mémoire de respectivement associer au moins un des emplacements mémoire de la mémoire principale où le fichier informatique est enregistré à au moins un emplacement mémoire d'une mémoire virtuelle d'un processus, afin de permettre à l'unité de traitement centrale exécutant ce processus d'accéder au contenu du fichier informatique.

Ainsi, grâce à l'invention, les données sont directement enregistrées dans des fichiers dans la mémoire principale, de sorte que leur accès se fait simplement en commandant l'unité de gestion mémoire. Ainsi, les mouvements de données au travers de l'interface entrée/sortie sont éliminés.

De façon optionnelle, le fichier informatique est associé à des métadonnées comportant l'un ou plusieurs parmi : un propriétaire du fichier informatique, des permissions d'accès au fichier informatique, un instant de création, un instant de modification et une taille du fichier informatique.

De façon optionnelle également, le fichier informatique se trouve dans une arborescence de répertoires.

De façon optionnelle également, le fichier informatique est un fichier informatique exécutable dont le contenu comporte des instructions destinées à être exécutées par l'unité de traitement centrale.

De façon optionnelle également, le fichier informatique est un fichier informatique de données dont le contenu comporte des données non-exécutables par l'unité de traitement centrale.

De façon optionnelle également, le système informatique comporte en outre des moyens matériels et/ou logiciels pour réserver des emplacements mémoire de la mémoire principale pour la création de fichiers informatiques et des moyens matériels et/ou logiciels pour empêcher que l'unité de gestion de mémoire n'associe des emplacements mémoire réservés libres à des emplacements mémoire d'une mémoire virtuelle d'un processus.

De façon optionnelle également, les moyens matériels et/ou logiciels pour réserver des emplacements mémoire de la mémoire principale sont conçus pour réaliser la réservation par pages d'emplacements mémoire, chaque page regroupant un même nombre d'emplacements mémoire consécutifs.

De façon optionnelle également, les moyens matériels et/ou logiciels pour réserver des emplacements mémoire de la mémoire principale sont conçus pour modifier dynamiquement quels emplacements mémoire sont réservés.

L'invention a également pour objet un procédé d'accès à un fichier informatique, mis en oeuvre dans un système informatique comportant :
- une unité de traitement centrale,
- une mémoire principale non volatile comportant des emplacements mémoire,
- une unité de gestion de mémoire conçue pour respectivement associer des emplacements mémoire de la mémoire principale à des emplacements mémoire d'une mémoire virtuelle d'un processus,
le procédé comportant :
- la création d'un fichier informatique dans un ou plusieurs emplacements mémoire de la mémoire principale,
- la commande de l'unité de gestion de mémoire pour respectivement associer au moins un des emplacements mémoire de la mémoire principale où le fichier informatique est enregistré à au moins un emplacement mémoire d'une mémoire virtuelle d'un processus, afin de permettre à l'unité de traitement centrale exécutant ce processus d'accéder au contenu du fichier informatique.

L'invention a également pour objet un programme d'ordinateur téléchargeable depuis un réseau de communication et/ou enregistré sur un support lisible par ordinateur et/ou exécutable par un processeur, caractérisé en ce qu'il comprend des instructions pour l'exécution des étapes d'un procédé d'accès à un fichier informatique selon la revendication 9, lorsque ledit programme est exécuté sur un ordinateur.

L'invention sera mieux comprise à l'aide de la description qui va suivre, donnée uniquement à titre d'exemple et faite en se référant aux dessins annexés dans lesquels :
- la figure 1 représente schématiquement la structure générale d'un système informatique, selon un mode de réalisation de l'invention,
- la figure 2 illustre les étapes successives d'un procédé d'accès à un fichier informatique, selon un mode de réalisation de l'invention, et
- les figures 3 et 4 illustrent la relation entre une mémoire principale du système informatique de la figure 1 et une mémoire virtuelle d'un processus, respectivement dans le cas d'un accès à un fichier informatique exécutable et à un fichier informatique de données.

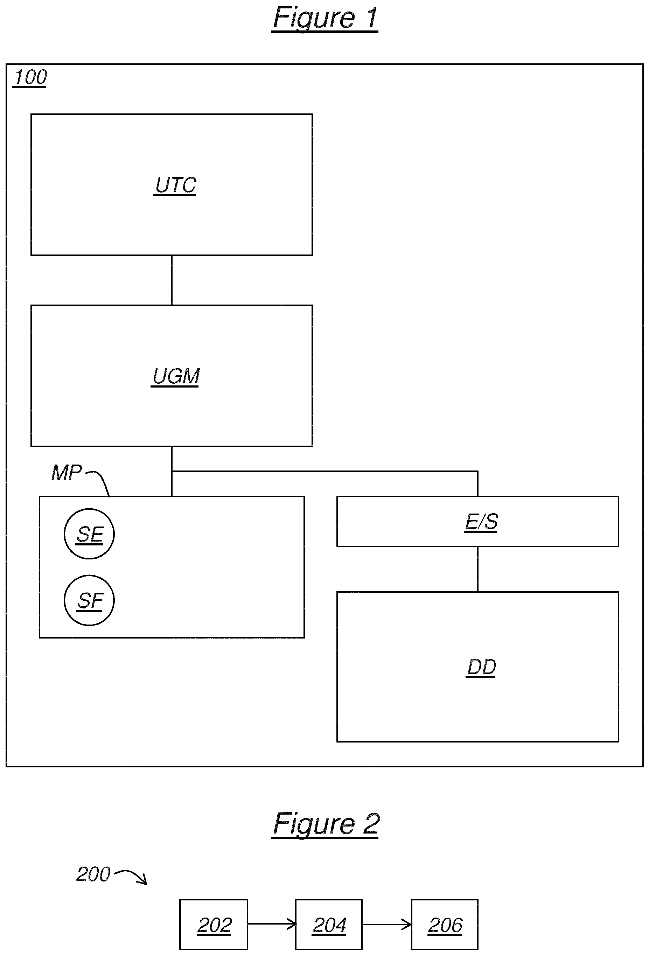

En référence à la figure 1, un système informatique 100 mettant en oeuvre l'invention va à présent être décrit.

Le système informatique 100 comporte tout d'abord une unité de traitement centrale UTC conçue pour exécuter des instructions de programme d'ordinateur.

Le système informatique 100 comporte en outre une mémoire principale MP non volatile comportant des emplacements mémoire dans lesquels des données sont destinées à être enregistrées. Les emplacements mémoires sont repérés par des adresses dans la mémoire principale MP. Ces adresses sont dites réelles.

Le système informatique 100 comporte en outre une unité de gestion de mémoire UGM conçue pour respectivement associer des emplacements mémoire de la mémoire principale MP à des emplacements mémoire d'une mémoire virtuelle (appelée également mémoire logique) d'un processus en cours d'exécution par le système informatique 100. L'unité de gestion de mémoire UGM réalise cette association en associant, pour chaque processus en cours d'exécution, des adresses réelles d'emplacements mémoire de la mémoire principale MP à des adresses virtuelles des mémoires virtuelles respectives des processus. Cette association est appelée « mapping » en anglais. Dans l'exemple décrit, l'unité de gestion de mémoire UGM est conçue pour réaliser ces associations par pages, chaque page regroupant un même nombre d'emplacements mémoire. Ainsi, tous les emplacements mémoire d'une même page de mémoire principale MP sont respectivement mappés aux emplacements mémoire d'une même page de mémoire virtuelle.

Le système informatique 100 peut en outre comporter une mémoire secondaire DD non volatile, telle qu'un disque dur, et une interface d'entrée/sortie E/S par laquelle l'unité centrale de traitement UTC peut accéder à la mémoire secondaire DD. La mémoire secondaire DD présente de préférence une capacité de stockage supérieure à celle de la mémoire principale MP, par exemple au moins dix fois supérieure.

Le système informatique 100 comporte en outre des programmes d'ordinateur destinés à être exécutés par l'unité de traitement centrale UTC.

Ces programmes d'ordinateur comportent un système d'exploitation SE et un système de fichiers SF. De manière générale, un système de fichiers regroupe un ensemble de mécanismes et de règles permettant de stocker et de retrouver des données, ces données étant stockées sous forme de fichiers informatiques. Un fichier informatique est un objet informatique persistant, c'est-à-dire qu'il persiste même lorsqu'il n'est pas utilisé par un processus ou un autre programme d'ordinateur en cours d'exécution (comme le système d'exploitation SE et le système de fichiers SF, qui fonctionnent généralement en mode noyau - « *kernel* » en anglais). En outre, les fichiers informatiques sont enregistrés selon un format défini par le système de fichiers SF. Chaque fichier informatique est identifié par un identifiant (par exemple, un identifiant unique universel, en anglais « Universally Unique IDentifier » ou UUID), et présente un nom de fichier. Les fichiers informatiques se trouvent de préférence dans une arborescence de répertoire(s), gérée par le système de fichiers SF. Chaque fichier informatique peut en outre être associé à des métadonnées comportant l'un ou plusieurs parmi : un propriétaire du fichier informatique, des permissions d'accès au fichier informatique, un instant (par exemple, date et heure) de création, un instant (par exemple, date et heure) de modification et une taille du fichier informatique. Des exemples d'accès au fichier informatique sont : lecture du fichier informatique, écriture du fichier informatique, exécution du fichier informatique.

Dans l'exemple décrit, le système de fichiers SF est représenté comme distinct du système d'exploitation SE. Cependant, le système de fichiers SF peut également être intriqué dans le système d'exploitation SE, de sorte qu'il peut être difficile de les distinguer. Dans ce cas, le système d'exploitation SE lui-même peut être considéré comme formant le système de fichiers SF.

Le système d'exploitation SE est notamment conçu pour réserver des emplacements mémoire de la mémoire principale MP pour la création de fichiers informatiques. Il est en outre conçu pour empêcher que l'unité de gestion de mémoire UGM n'associe des emplacements mémoire réservés libres, c'est-à-dire dans lesquels aucun fichier informatique du système de fichier SF n'est enregistré, à des emplacements mémoire d'une mémoire virtuelle d'un processus.

De préférence, le système d'exploitation SE est conçu pour réserver des emplacements mémoire de la mémoire principale MP par pages d'emplacements mémoire de la mémoire principale MP, chaque page regroupant un même nombre d'emplacements mémoire consécutifs. Ces pages correspondent aux pages utilisées par l'unité de gestion de mémoire UGM, ce qui facilite la mise en oeuvre de la réservation des emplacements mémoire. Le système d'exploitation SE est de préférence conçu pour modifier dynamiquement quels emplacements mémoire sont réservés. Cela signifie par exemple que la modification de la réservation peut intervenir lorsque le système informatique fonctionne, par exemple lorsqu'il exécute des programmes d'ordinateur. En particulier, la modification de la réservation peut intervenir lorsque des processus sont en cours d'exécution. Le nombre d'emplacements mémoire réservés est par exemple défini par un mécanisme d'équilibrage automatique prenant en compte les besoins en mémoire des processus en cours d'exécution. La réservation d'emplacements mémoire peut également être réalisée sous la commande d'un administrateur (humain) du système informatique 100.

Le système de fichiers SF est de son côté conçu pour créer des fichiers informatiques dans un ou plusieurs emplacements mémoire réservés libres de la mémoire principale MP. Les fichiers informatiques créés dans la mémoire principale MP sont par exemple dupliqués ou déplacés depuis la mémoire secondaire DD. L'enregistrement d'un fichier informatique dans la mémoire principale MP est de préférence réalisé par pages. Le système de fichiers est en outre conçu pour fournir les mécanismes habituels de manipulation des fichiers informatiques enregistrés dans la mémoire principale MP : lecture, écriture, effacement, renommage, etc.

Pour permettre à un processus d'accéder à un fichier informatique enregistré dans la mémoire principale, le système d'exploitation SE est conçu pour commander à l'unité de gestion de mémoire UGM de respectivement associer au moins un des emplacements mémoire de la mémoire principale MP où le fichier informatique est enregistré à au moins un emplacement mémoire d'une mémoire virtuelle d'un processus, afin de permettre à l'unité de traitement centrale UTC exécutant ce processus d'accéder au contenu du fichier informatique.

Le fichier informatique peut être un fichier informatique exécutable dont le contenu comporte des instructions destinées à être exécutées par l'unité de traitement centrale UTC, ou bien un fichier informatique de données dont le contenu comporte des données non-exécutables par l'unité de traitement centrale UTC.

En référence à la figure 2, un procédé 200 selon l'invention d'accès à un fichier informatique va à présent être décrit. Dans l'exemple décrit, les emplacements mémoire sont traités par page.

Au cours d'une étape 202, le système d'exploitation SE réserve des pages d'emplacements mémoire de la mémoire principale MP pour la création de fichiers informatiques. À ce stade, toutes les pages réservées sont libres. L'étape 202 n'a pas besoin d'être répétée. La réservation effectuée par le système d'exploitation SE est en effet de préférence réalisée de manière permanente, c'est-à-dire qu'elle persiste après la mise hors tension du système informatique 100.

Au cours d'une étape 204, le système de fichiers SF crée un fichier informatique F1 dans une ou plusieurs pages réservées libres.

Au cours d'une étape 206, pour permettre à un processus P1 d'accéder au fichier informatique F1, le système d'exploitation SE commande à l'unité de gestion de mémoire UGM de respectivement associer au moins une des pages de la mémoire principale MP où le fichier informatique F1 est enregistré à au moins une page d'une mémoire virtuelle MV_P1 du processus P1. Par exemple, toutes les pages où le fichier informatique F1 est enregistré sont associées à des pages de la mémoire virtuelle MV_P1. Ainsi, le processus P1 a accès à la totalité du fichier F1.

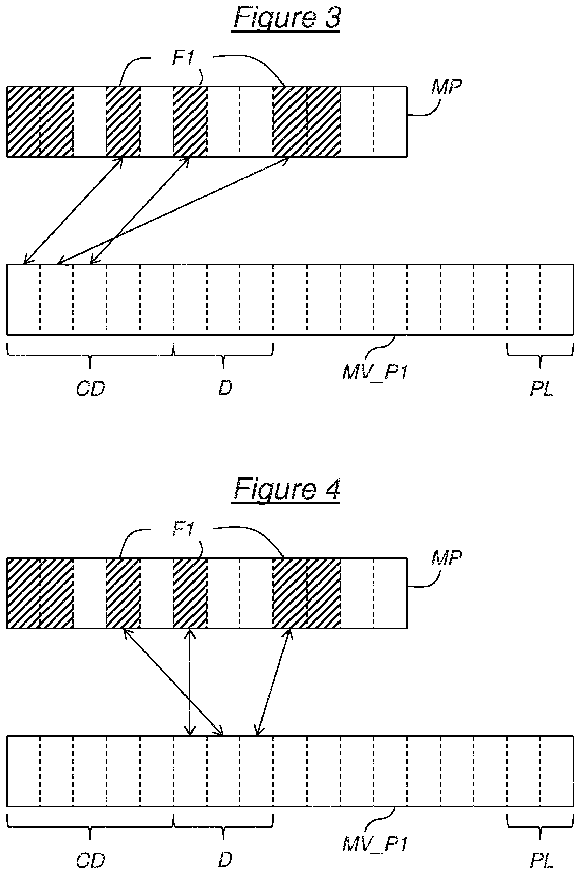

Sur les figures 3 et 4, les pages réservées sont hachurées. En outre, trois parties de la mémoire virtuelle MV_P1 sont représentées : une partie comportant le code machine CD (« machine code » en anglais) à exécuter, une deuxième partie comportant les données globales D destinées à être manipulées (créées, modifiées, effacées, etc.) par le code machine CD et une troisième partie comportant la pile d'exécution PL (« stack » en anglais).

La figure 3 illustre le cas où le fichier informatique F1 est un fichier informatique exécutable dont l'exécution donne naissance au processus P1. Dans ce cas, le fichier F1 est « mappé » dans la partie comportant le code machine CD à exécuter.

La figure 4 illustre le cas où le fichier informatique F1 est un fichier informatique de données auquel le processus P1 cherche à accéder. Dans ce cas, le fichier F1 est « mappé » dans la partie comportant les données globales D, en tout cas hors de la partie comportant le code machine CD à exécuter.

Il apparaît clairement qu'un système informatique et procédé tels que ceux décrits précédemment permettent d'accéder à un fichier informatique sans qu'il ne soit nécessaire de passer par l'interface d'entrée/sortie pour le lire ou bien écrire dedans.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

En particulier, bien que le système d'exploitation SE et le système de fichiers SF aient été décrits comme étant des programmes d'ordinateur, l'invention n'est pas limitée à ce cas de figure. En effet, les fonctions associées aux instructions de ces programmes d'ordinateur pourraient être au moins en partie micro programmées ou micro câblées dans des circuits intégrés dédiés. Ainsi, en variante, chacun des système d'exploitation SE et système de fichiers SF pourrait être remplacé par un dispositif électronique composé uniquement de circuits numériques (sans programme d'ordinateur) pour la réalisation des mêmes fonctions.

De même, tout ou partie des fonctions de l'unité de gestion de mémoire UGM pourraient alternativement être réalisées par des programmes d'ordinateur comportant des instructions pour la réalisation de ces fonctions.

Dans la présentation générale de l'invention qui est faite précédemment entre la page 1, ligne 23, et la page 3, ligne 20, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en oeuvre de l'enseignement qui vient de lui être divulgué.

## Revendications

1. Système informatique (100) comportant :
- une unité de traitement centrale (UTC),
- une mémoire principale (MP) comportant des emplacements mémoire,
- une unité de gestion de mémoire (UGM) conçue pour respectivement associer des emplacements mémoire de la mémoire principale (MP) à des emplacements mémoire d'une mémoire virtuelle d'un processus,
**caractérisé en ce que** la mémoire principale (MP) est non volatile et **en ce que** le système informatique (100) comporte en outre :
- des moyens matériels et/ou logiciels (SE, SF) pour créer un fichier informatique (F1) dans un ou plusieurs emplacements mémoire de la mémoire principale (MP), le fichier informatique (F1) étant un fichier informatique exécutable dont le contenu comporte des instructions destinées à être exécutées par l'unité de traitement centrale (UTC),
- des moyens matériels et/ou logiciels (SE, SF) pour commander à l'unité de gestion de mémoire (UGM) de respectivement associer au moins un des emplacements mémoire de la mémoire principale (MP) où le fichier informatique (F1) est enregistré à au moins un emplacement mémoire d'une partie d'une mémoire virtuelle (MV_P1) d'un processus, cette partie de la mémoire virtuelle (MV_P1) étant destinée à contenir du code machine (CD) destiné à être exécuté, afin de permettre à l'unité de traitement centrale (UTC) exécutant ce processus d'accéder au contenu du fichier informatique (F1) pour que les instructions contenues dans le fichier informatique (F1) soient exécutées.

2. Système informatique (100) selon la revendication 1, dans lequel le fichier informatique (F1) est associé à des métadonnées comportant l'un ou plusieurs parmi : un propriétaire du fichier informatique (F1), des permissions d'accès au fichier informatique (F1), un instant de création, un instant de modification et une taille du fichier informatique (F1).

3. Système informatique (100) selon la revendication 1 ou 2, dans lequel le fichier informatique (F1) se trouve dans une arborescence de répertoires.

4. Système informatique (100) selon l'une quelconque des revendications 1 à 3, comportant en outre des moyens matériels et/ou logiciels (SE, SF) pour réserver des emplacements mémoire de la mémoire principale (MP) pour la création de fichiers informatiques et des moyens matériels et/ou logiciels (SE, SF) pour empêcher que l'unité de gestion de mémoire (UGM) n'associe des emplacements mémoire réservés libres à des emplacements mémoire d'une mémoire virtuelle d'un processus.

5. Système informatique (100) selon la revendication 4, dans lequel les moyens matériels et/ou logiciels (SE, SF) pour réserver des emplacements mémoire de la mémoire principale (MP) sont conçus pour réaliser la réservation par pages d'emplacements mémoire, chaque page regroupant un même nombre d'emplacements mémoire consécutifs.

6. Système informatique selon la revendication 4 ou 5, dans lequel les moyens matériels et/ou logiciels (SE, SF) pour réserver des emplacements mémoire de la mémoire principale (MP) sont conçus pour modifier dynamiquement quels emplacements mémoire sont réservés.

7. Procédé d'accès à un fichier informatique (F1), mis en oeuvre dans un système informatique (100) comportant :
- une unité de traitement centrale (UTC),
- une mémoire principale (MP) non volatile comportant des emplacements mémoire,
- une unité de gestion de mémoire (UGM) conçue pour respectivement associer des emplacements mémoire de la mémoire principale (MP) à des emplacements mémoire d'une mémoire virtuelle d'un processus,
le procédé comportant :
- la création d'un fichier informatique (F1) dans un ou plusieurs emplacements mémoire de la mémoire principale (MP), le fichier informatique (F1) étant un fichier informatique exécutable dont le contenu comporte des instructions destinées à être exécutées par l'unité de traitement centrale (UTC),
- la commande de l'unité de gestion de mémoire (UGM) pour respectivement associer au moins un des emplacements mémoire de la mémoire principale (MP) où le fichier informatique (F1) est enregistré à au moins un emplacement mémoire d'une partie d'une mémoire virtuelle (MV_P1) d'un processus, cette partie de la mémoire virtuelle (MV_P1) étant destinée à contenir du code machine (CD) destiné à être exécuté, afin de permettre à l'unité de traitement centrale (UTC) exécutant ce processus d'accéder au contenu du fichier informatique (F1) pour que les instructions contenues dans le fichier informatique (F1) soient exécutées.

8. Programme d'ordinateur téléchargeable depuis un réseau de communication et/ou enregistré sur un support lisible par ordinateur et/ou exécutable par un processeur, **caractérisé en ce qu'**il comprend des instructions pour l'exécution des étapes d'un procédé d'accès à un fichier informatique selon la revendication 7, lorsque ledit programme est exécuté sur un ordinateur.
